# EUROPEAN PATENT SPECIFICATION

(11) **EP 0 647 405 B1**
(45) Date of publication and mention of the grant of the patent: **21.01.1998**
(21) Application number: 94307412.0
(22) Date of filing: 10.10.1994
(51) Int. Cl.: A21C 3/06

(54) **A method of adjusting the position of a rolled-up end in croissant dough-piece bending apparatus**
Verfahren zum Positionieren von dem aufgerollten Ende in einen Vorrichtung zum Biegen von Hörnchenteigstücken
Procédé pour la mise en place de l'extremité enroulée dans un appareil pour plier les morceaux de pâte pour les croissants

(30) Priority: 15.10.1993 JP 281620/93; 08.10.1993 JP 277583/93
(43) Date of publication of application: 12.04.1995
(73) Proprietor: RHEON AUTOMATIC MACHINERY CO. LTD., Utsunomiya-shi Tochigi-ken (JP)
(72) Inventor: Ueno, Sadao, Rheon Automatic Machinery Co.,Ltd., Utsunomiya-shi, Tochigi-ken (JP); Kuwahara, Hitoshi, Rheon Automatic Mach. Co.,Ltd., Utsunomiya-shi, Tochigi-ken (JP); Morikawa, Michio, Rheon Automatic Mach. Co.,Ltd., Utsunomiya-shi, Tochigi-ken (JP)
(74) Representative: Warren, Anthony Robert

(56) References cited:
- DE-A- 2 603 168
- FR-A- 1 110 420
- FR-A- 2 558 339

## Description

The present invention provides a method and apparatus for adjusting or determining the position of a rolled-up end of a croissant dough piece, so that the dough piece is conveyed with the rolled-up end always at a certain position.

So far as the inventors of the present invention are aware, no such apparatus or method has previously been proposed.

Previously, a croissant dough piece has been produced by randomly rolling up the dough sheet to obtain a fusiform dough body. In that croissant producing method, the position of the rolled-up end of the croissant dough piece is not determined. Thus the resultant croissants take on irregular appearances. This is a problem that must be resolved when they are mass-produced, to produce products of a uniform shape. FR-A-1,110,420 discloses such a dough rolling device.

It is the object of the present invention to provide a method and apparatus for positioning, at a predetermined position, the outer rolled-up end of a croissant dough piece based on novel means that have not been developed in the conventional art, to thereby obtain products of a uniform shape.

According to one aspect of the present invention, there is provided a method of adjusting the position of the outer rolled-up end of a croissant dough piece as defined in claim 1.

According to another aspect of the present invention, there is provided apparatus for adjusting the position of a rolled-up end of a croissant-dough piece in a croissant dough-piece bending apparatus, as defined in claim 6.

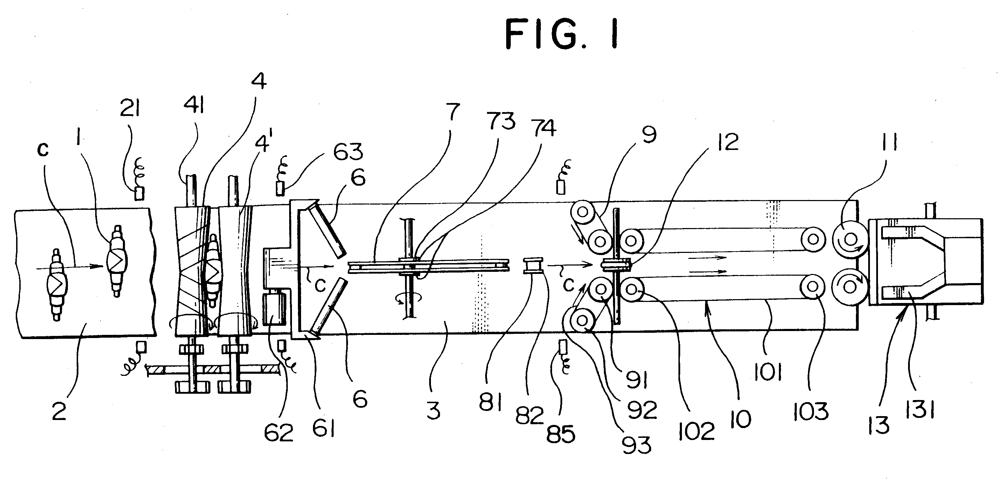

Reference will now be made to the accompanying drawings, in which:-
Fig. 1 is an overall plan view of a croissant dough-piece bending machine in which the method embodying the present invention is used;

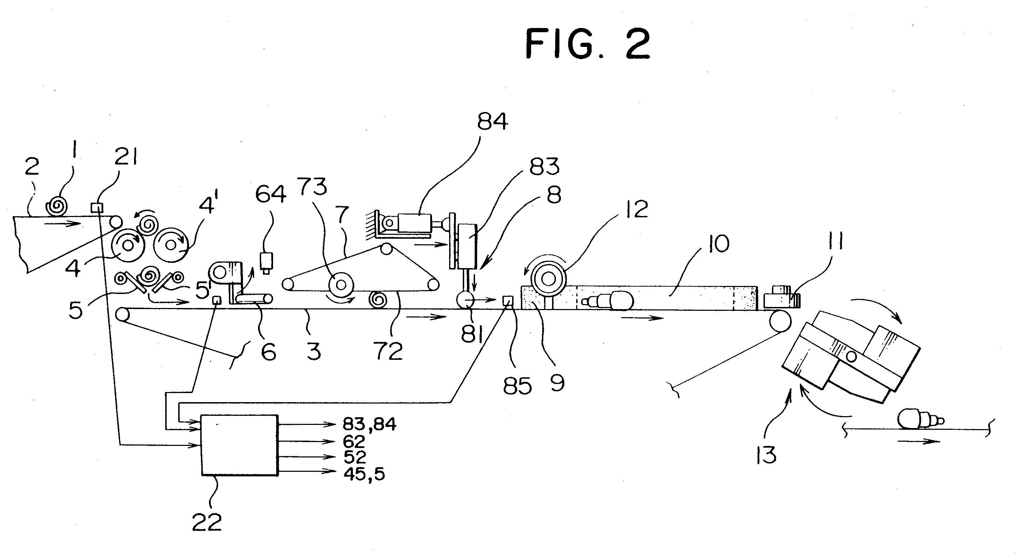

Fig. 2 is an overall side view of the machine of Fig. 1;

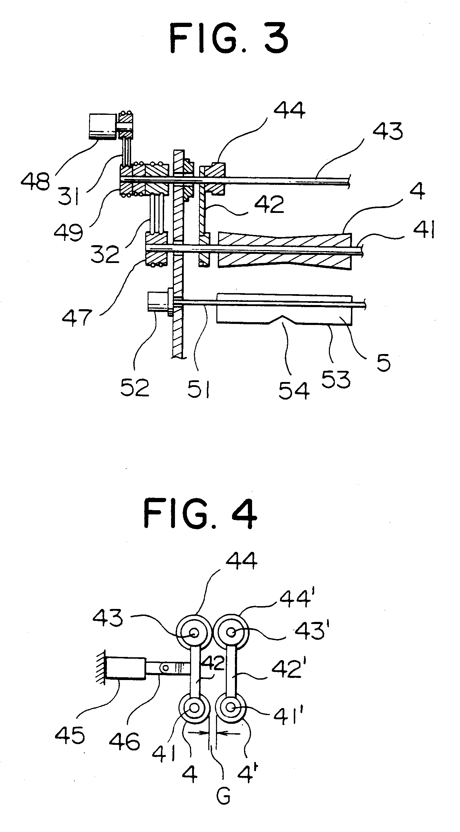

Fig. 3 is a front sectional view of the center aligning apparatus;
Fig. 4 is a partial side view of the apparatus of Fig. 3;
Fig. 5 is a side view of the rolled-up end sensing portion of the apparatus; and
Fig. 6 is another embodiment of the portion of Fig. 5.

An embodiment of the present invention will now be described in connection with a croissant-dough bending machine. The machine comprises an upstream conveyor 2 to convey rolled-up croissant dough pieces 1, and a downstream conveyor 3 located downstream of and below the upstream conveyor 2.

A pair of concave rollers 4, 4' are located adjacent the upstream conveyor 2, and between the upstream conveyor 2 and the downstream conveyor 3. The concave rollers 4, 4' are positioned side by side with their axes positioned horizontally, and laterally to the direction of movement of the conveyor.

A pair of opposed planar shutters 5 is provided below and adjacent the concave rollers 4, 4'. The concave rollers 4, 4' and the shutters 5 form a center-aligning apparatus for aligning the central thick portion of the fusiform dough piece with the center line C of the downstream conveyor 3.

On the downstream conveyor 3, a pair of inclined rollers 6 is provided as, or part of, an engaging means, device or member for the croissant dough piece 1. The upstream ends of the inclined rollers are positioned near the sides of the conveyor, and the downstream ends of the rollers approach each other, so that the rollers converge in the downstream direction. The inclined rollers and the conveying surface of the downstream conveyor are mutually parallel.

Also, the inclined rollers 6 freely rotate about the shaft of each of a pair of arms 61 extending from a member spaced apart from the conveyor 3 and rotatably connected to an actuator 62. The arms 61 swing upward as the actuator 62 is energized.

One or more photoelectric sensors or tubes 63 are located upstream of the inclined rollers 6. The photoelectric tubes 63 sense the croissant dough piece 1 that is supplied to the inclined rollers 6.

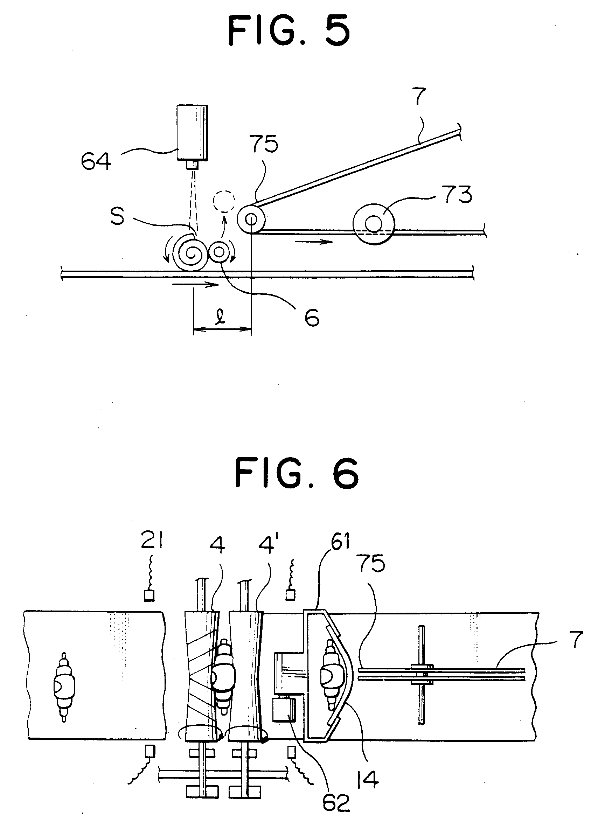

A laser sensor 64 is located above the center line C of the inclined rollers 6. This laser sensor 64 senses the rolled-up end S (see Fig. 6) of the croissant dough piece when it reaches the inclined rollers and is rotated thereby.

When the laser sensor 64 senses the rolled-up end S, the inclined rollers 6 are swung upward by the actuator 62, which receives a signal from a control unit or panel 22.

The swinging movement of the inclined rollers 6 is effected when a predetermined length of time lapses after the rolled-up end S is sensed by the laser sensor 64.

Dough-piece holding belts 7 are provided adjacent and downstream ends of the inclined rollers 6. The dough-piece holding belts 7 consist of two thin endless belts, which are trained in parallel relationship. The lower flights of the endless belts have a linear portion 72 that is in parallel with the conveying surface of the downstream conveyor 3. The upstream end 75 of the linear portion 72 is positioned adjacent the inclined rollers 6.

The dough piece holding belts 7 are moved by a driving device (not shown), so that the belts are moved at the same speed as the conveying speed of the downstream conveyor 3. At a downstream position of the holding belts 7 are provided a dough-piece bending member 8 and a pair of bending belts 9 to bend the croissant dough piece 1 at its center.

A pair of dough-piece gripping belts 10 is provided downstream of the bending belts 9. The dough piece, of which the rolled-up end is positioned at the bottom thereof, is thus discharged from the downstream conveyor 3 past a pair of gripping rollers 11.

The function of the apparatus will now be explained. A croissant dough piece 1 that was rolled up by a conventional rolling-up device is conveyed along the upstream conveyor 2. The croissant dough piece 1 is then delivered from the upstream conveyor to the downstream conveyor past the center-aligning apparatus, i.e. the concave rollers 4, 4'.

The croissant dough piece 1 deposited on the downstream conveyor 3 is then engaged by the engaging member, i.e., inclined rollers 6, which freely rotate to roll the croissant dough piece 1. If the position of the dough piece is misaligned with the center line C, its position can be corrected by these rollers 6.

When the croissant dough piece 1 reaches the inclined rollers 6, and a signal from photoelectric tubes 63 indicative of the arrival of the subsequent dough piece is transmitted to the control panel 22, the laser sensor 64 begins to sense the rolled-up end S of the dough piece.

This sensing operation is carried out while the croissant dough piece 1 is rotated. The rolled-up end S is sensed as a difference in the thickness between the outer surface of the rolled-up end S and the layer below it, and this signal is supplied to the control panel 22.

The control panel, after a predetermined lapse of time following the sensing of the end S by the laser sensor 64, gives a signal to the actuator 62 so that the inclined rollers 6 are disengaged from the dough piece 1, namely, the rollers are swung upwardly, before the dough piece is conveyed downstream under the rollers. The rolled-up end is sensed several times while the dough piece is rotated in contact with the inclined rollers 6. However, to enhance the center-aligning effect of the dough piece by the rollers 6, the signal for the rolled-up end S is not transmitted to the actuator 62 before the subsequent dough piece 1 is sensed by the photoelectric tubes 63.

When the inclined rollers 6 are swung upward, the croissant dough piece 1 is conveyed downstream, and the rotating dough piece is soon caught by the upstream end 75 of the holding belts 7, so that the holding belts 7 stop the dough piece's rotation to thereby convey it downstream.

Fig. 6 shows another embodiment of the engaging member. In this embodiment, as opposed to the pair of freely-rotatable rollers 6, a curved dough-engaging plate 14 is used. It is connected to the arm 61 as in the previous embodiment, so that it can be swung upward. The engaging plate 14 is configured, when it is lowered to engage a dough piece, so as to hug or snugly cooperate with the dough piece.

Although this form of engaging plate is not fully effective in aligning the center of the croissant dough piece, the plate substantially attains the required effect and function if the alignment has been fully carried out in the preceding stations.

The reason that the control unit or panel 22 energizes the actuator 62 after a predetermined lapse of time (0.2sec in this embodiment) from the time the panel 22 receives from the laser sensor 64 the signal for the rolled-up end S of the dough piece, is that, even after the rolled-up end S is sensed, the dough piece still rotates along the distance (Fig. 5), before it is caught by the upstream end 75 of the holding belts 7. The rolled-up end S, when it is engaged by the upstream end 75, must be located at the underside of the dough piece. The predetermined lapse of time of 0.2sec is determined based on the amount of the dough piece's rotation.

By stopping the dough piece's rotation, the dough piece separated from the inclined rollers 6 can no longer be rotated and thus cannot swerve or deviate from the center line C. The dough piece is conveyed downstream along the center line C by the holding belts 72, which move at the same speed as that of the downstream conveyor. Thus the dough piece is conveyed downstream without changing its orientation, because the dough piece is held between the belts 7 and the conveyor 3.

The dough piece thus conveyed reaches the bending belts 9 past the bending member 8, and thereafter it is further carried downstream by a pair of gripping belts 10 to be discharged from the downstream conveyor.

Although, as previously explained, in this embodiment the position of the rolled-up end of the dough piece is always located at the bottom thereof, it is of course possible to change the position, when desired, by changing the sensing mode of the laser sensor 64, or by changing the distance between the dough piece positioned below the laser sensor 64 and the upstream end 75 of the holding belts 7.

As explained above, according to the present invention, the center of the rolled-up croissant dough piece is aligned by a pair of inclined rollers, and the rolled-up end of the dough piece is sensed so that the end is always uniformly positioned relative to the body of the dough piece. Thus the rolled-up end of the bent product always occupies the same position to provide products of the same shape. Therefore, it has become possible to obtain products of higher quality with higher productivity.

## Claims

1. A method of adjusting the position of a rolled-up end of a croissant-dough piece in a croissant dough-piece bending apparatus, comprising the steps of conveying a rolled-up croissant dough piece (1) by a conveyor (3), adjusting the rolled-up end (S) by engaging an engaging device (6, 14) provided on the conveyor (3) with the dough piece to roll the dough piece, sensing the rolled-up end (S) of the dough piece (1) by a sensor (64) while the dough piece is being rolled, the sensor (64) being adapted to provide signals, and disengaging the engaging device (6, 14) from the dough piece based on a signal from the sensor (64).

2. A method according to claim 1, wherein the engaging device includes a pair of rollers (6) that converge towards each other in the downstream direction of the conveyor (3).

3. A method according to claim 1, wherein the engaging device includes an engaging plate (14) that is configured, when it is positioned to engage a dough piece (1), so as to hug or closely cooperate with the dough piece.

4. A method according to claim 1, 2 or 3, which includes raising the engaging device (6, 14) out of contact with the dough piece in response to detection by the sensor (64) of the rolled-up end (S), to release the dough piece for movement along the conveyor (3).

5. A method according to any preceding claim, which includes disengaging the engaging device (6, 14) from the dough piece (1) in response to detection by the sensor (64) of the rolled-up end (S), after sensing by a further sensor (63) of a subsequent dough piece approaching the engaging device.

6. Apparatus for adjusting the position of a rolled-up end of a croissant-dough piece in a croissant dough-piece bending apparatus, comprising a conveyor (3) for conveying a rolled-up croissant dough piece (1), adjusting means for adjusting the rolled-up end (S) by engaging and disengaging an engaging device (6, 14) provided on the conveyor (3) with and from the dough piece, a sensor (64) for sensing the rolled-up end (S) of the dough piece (1) while the dough piece is being rolled, and for providing a corresponding signal which is operable to disengage the engaging device (6, 14) from the dough piece.

7. Apparatus according to claim 6, wherein the engaging device includes a pair of rollers (6) that converge towards each other in the downstream direction of the conveyor (3).

8. Apparatus according to claim 6, wherein the engaging device includes an engaging plate (14) that is configured, when it is positioned to engage a dough piece (1), so as to hug or closely cooperate with the dough piece.

9. Apparatus according to claim 6, 7 or 8, including means to raise the engaging device (6, 14) out of contact with the dough piece in response to detection by the sensor (64) of the rolled-up end (S), to release the dough piece for movement along the conveyor (3).

10. Apparatus according to any of claims 6 to 9, wherein the engaging device (6, 14) is arranged to be disengaged from the dough piece (1) in response to detection by the sensor (64) of the rolled-up end (S), after sensing by a further sensor (63) of a subsequent dough piece approaching the engaging device.

## Patentansprüche

1. Verfahren zum Einstellen der Position eines aufgerollten Endes eines Croissant-Teigstückes (Hörnchen) in einem Croissant-Teigstück-Biegeapparat, umfassend die Schritte des Beförderns eines aufgerollten Croissant-Teigstückes (1) durch ein Förderband (3), des Veranlassens einer Eingriffsvorrichtung (6, 14), die an dem Förderband (3) vorgesehen ist, mit dem Teigstück in Kontakt zu kommen und dieses zu rollen, des Erfassens des aufgerollten Endes (S) des Teigstückes (1) durch einen Sensor (64), während das Teigstück gerollt wird, wobei der Sensor (64) zur Abgabe von Signalen ausgebildet ist, und des Lösens der Eingriffsvorrichtung (6,14) von dem Teigstück auf der Basis eines Signals von dem Sensor (64).

2. Verfahren nach Anspruch 1, wobei die Eingriffsvorrichtung ein Paar Walzen (6) enthält, die zueinander in Laufrichtung des Förderbandes (3) konvergieren.

3. Verfahren nach Anspruch 1, wobei die Eingriffsvorrichtung eine Eingriffsplatte (14) enthält, die so konfiguriert ist, daß sie, wenn sie für den Eingriff mit einem Teigstück (1) positioniert ist, das Teigstück fest andrückt oder eng mit diesem zusammenwirkt.

4. Verfahren nach Anspruch 1, 2 oder 3, welches das Anheben der Eingriffsvorrichtung (6,14) aus dem Kontakt mit dem Teigstück als Reaktion auf das Erfassen des aufgerollten Endes (S) durch den Sensor (64) umfaßt, um das Teigstück für die Bewegung entlang dem Förderband (3) freizugeben.

5. Verfahren nach einem der vorangehenden Ansprüche, welches das Lösen der Eingriffsvorrichtung (6,14) von dem Teigstück (1) als Reaktion auf das Erfassen des aufgerollten Endes (S) durch den Sensor (64) umfaßt, nachdem ein weiterer Sensor (63) ein folgendes Teigstück erfaßt hat, welches sich der Eingriffsvorrichtung nähert.

6. Vorrichtung zum Einstellen der Position eines aufgerollten Endes eines Croissant-Teigstückes (Hörnchen) in einem Croissant-Teigstück-Biegeapparat, umfassend ein Förderband (3) zum Befördern eines aufgerollten Croissant-Teigstückes (1), eine Eingriffsvorrichtung (6, 14), die an dem Förderband (3) vorgesehen ist und betätigbar ist, um mit dem Teigstück in lösbaren Kontakt zu kommen und dieses zu rollen, einen Sensor (64) zum Erfassen des aufgerollten Endes (S) des Teigstückes (1), während das Teigstück gerollt wird, und zur Abgabe eines entsprechenden Signals, das zum Lösen der Eingriffsvorrichtung (6, 14) von dem Teigstück einsetzbar ist.

7. Vorrichtung nach Anspruch 6, wobei die Eingriffsvorrichtung ein Paar Walzen (6) enthält, die zueinander in Laufrichtung des Förderbandes (3) konvergieren.

8. Vorrichtung nach Anspruch 6, wobei die Eingriffsvorrichtung eine Eingriffsplatte (14) enthält, die so konfiguriert ist, daß sie, wenn sie für den Eingriff mit einem Teigstück (1) positioniert ist, das Teigstück fest andrückt oder eng mit diesem zusammenwirkt.

9. Vorrichtung nach Anspruch 6, 7 oder 8, welche Mittel zum Anheben der Eingriffsvorrichtung (6, 14) aus dem Kontakt mit dem Teigstück als Reaktion auf das Erfassen des aufgerollten Endes (S) durch den Sensor (64) umfaßt, um das Teigstück für die Bewegung entlang dem Förderband (3) freizugeben.

10. Vorrichtung nach einem der Ansprüche 6 bis 9, wobei die Eingriffsvorrichtung (6,14) so angeordnet ist, daß sie von dem Teigstück (1) als Reaktion auf das Erfassen des aufgerollten Endes (S) durch den Sensor (64) gelöst wird, nachdem ein weiterer Sensor (63) ein folgendes Teigstück erfaßt hat, welches sich der Eingriffsvorrichtung nähert.

## Revendications

1. Procédé de réglage de la position de l'extrémité roulée extérieure d'un pâton de croissant comprenant les phases consistant à transporter un pâton de croissant roulé (1) au moyen d'un transporteur (3), amener un dispositif ou élément d'attaque (6, 14) prévu sur le transporteur (3), pour entrer en contact avec le pâton de croissant et le rouler, détecter l'extrémité roulée (S) du pâton de croissant (1) au moyen d'un détecteur (64) pendant que le pâton est roulé, le détecteur (64) étant adapté pour fournir des signaux, et dégager l'élément d'attaque (6, 14) du pâton de croissant sur la base du signal issu du détecteur (64).

2. Procédé selon la revendication 1, dans lequel le dispositif d'attaque comprend une paire de rouleaux (6) qui convergent l'un vers l'autre en direction de l'aval du transporteur (3).

3. Procédé selon la revendication 1, dans lequel le dispositif d'attaque comprend une plaque d'attaque (14) qui est configurée, lorsqu' elle est positionnée pour attaquer un pâton (1), de manière à épouser le pâton ou à coopérer étroitement avec ce dernier.

4. Procédé selon la revendication 1, 2, ou 3, qui comprend la phase consistant à relever le dispositif d'attaque (6, 14) pour l'éloigner du contact avec le pâton en réponse à la détection de l'extrémité roulée (S) par le détecteur (64), afin de libérer le pâton pour qu'il se déplace le long du transporteur (3).

5. Procédé selon une quelconque des revendications précédentes, qui comprend la phase consistant à dégager le dispositif d'attaque (6, 14) du pâton (1) en réponse à la détection de l'extrémité roulée (S) par le détecteur (64), après la détection par un autre détecteur (63) d'un pâton suivant qui s'approche du dispositif d'attaque.

6. Dispositif pour régler la position de l'extrémité roulée d'un pâton de croissant dans un dispositif de cintrage d'un pâton de croissant, comprenant un transporteur (3) destiné à transporter un pâton de croissant roulé (1), un dispositif d'attaque (6, 14) prévu sur le transporteur (3) et pouvant être mis en action pour être mis en contact avec le pâton et relâché, séparable et le rouler, un détecteur (64) destiné à détecter l'extrémité roulée (S) du pâton (1) pendant que le pâton est roulé, et à fournir un signal correspondant qui peut être mis en jeu pour dégager le dispositif d'attaque (6, 14) du pâton.

7. Dispositif selon la revendication 6, dans lequel le dispositif d'attaque comprend une paire de rouleaux (6) qui convergent l'un vers l'autre dans la direction aval du transporteur (3).

8. Dispositif selon la revendication 6, dans lequel le dispositif d'attaque comprend une plaque d'attaque (14) qui est configurée, lorsqu'elle est positionnée pour attaquer un pâton (1), de manière à épouser le pâton ou à coopérer étroitement avec ce dernier.

9. Dispositif selon la revendication 6, 7 ou 8, comprenant des moyens pour soulever le dispositif d'attaque (6, 14) en le dégageant du contact avec le pâton en réponse à la détection par le détecteur (64) de l'extrémité roulée (S), afin de libérer le pâton pour qu'il se déplace le long du transporteur (3).

10. Dispositif selon une quelconque des revendications 6 à 9, dans lequel le dispositif d'attaque (6, 14) est agencé pour être dégagé du pâton (1) en réponse à la détection de l'extrémité roulée (S) par le détecteur (64), après la détection par un autre détecteur (63) d'un pâton suivant qui s'approche du dispositif d'attaque.
